(19) Europäisches Patentamt / European Patent Office / Office européen des brevets

(11) **EP 2 613 213 A1**

(12) **DEMANDE DE BREVET EUROPEEN**

(43) Date de publication:
**10.07.2013  Bulletin 2013/28**

(51) Int Cl.:
*G05D 1/00* (2006.01)  *A63H 30/04* (2006.01)

(21) Numéro de dépôt: **13150127.2**

(22) Date de dépôt: **03.01.2013**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **04.01.2012  FR 1250069**

(71) Demandeur: **Parrot**
**75010 Paris (FR)**

(72) Inventeurs:
• **Callou, François**
**75012 Paris (FR)**
• **Foinet, Gilles**
**75015 Paris (FR)**

(74) Mandataire: **Dupuis-Latour, Dominique**
**Bardehle Pagenberg**
**10, boulevard Haussmann**
**75009 Paris (FR)**

(54) **Procédé de pilotage intuitif d'un drone au moyen d'un appareil de télécommande**

(57)    L'utilisateur incline l'appareil (16) selon des axes de tangage (32) et de roulis (34) pour produire des signaux d'inclinaison ($\theta_l$, $\varphi_l$) qui sont transformés en consignes correspondantes ($\theta_d$, $\varphi_d$) de commande du drone (10) en attitude du drone selon des axes de tangage (22) et de roulis (24) du drone. Le drone et l'appareil déterminent chacun l'orientation de leur repère local ($X_l Y_l Z$ ; $X_b Y_b Z_b$) par rapport à un repère absolu lié au sol ($X_{NED} Y_{NED} Z_{NED}$), pour déterminer l'orientation angulaire relative du drone par rapport à l'appareil. Puis le repère de l'appareil est recalé sur le repère du drone par une rotation fonction de cette orientation angulaire relative. Les valeurs recalées correspondent ainsi à des commandes utilisateur référencées dans le repère de l'appareil et non plus dans celui du drone, ce qui permet un pilotage plus intuitif lorsque l'utilisateur regarde le drone.

Fig. 2

**Description**

L'invention concerne le pilotage des drones à voilure tournante tels que les quadricoptères et analogues.

Ces drones sont pourvus de rotors multiples entraînés par des moteurs respectifs commandables de manière différenciée afin de piloter le drone en attitude et en vitesse.

Un exemple typique d'un tel drone est le *AR.Drone* de Parrot SA, Paris, France, qui est un quadricoptère équipé d'une série de capteurs (accéléromètres, gyromètres trois axes, altimètre). Le drone est également pourvu d'une caméra frontale captant une image de la scène vers laquelle est dirigé le drone, ainsi que d'une caméra de visée verticale captant une image du terrain survolé.

Ce drone est piloté par l'utilisateur au moyen d'un dispositif de télécommande déportée - ci-après désigné "appareil" - relié au drone par une liaison radio.

Les WO 2010/061099 A2 et EP 2 364 757 A1 (Parrot SA) décrivent en particulier un tel drone et son principe de pilotage par l'intermédiaire d'un téléphone ou baladeur multimédia à écran tactile et accéléromètre intégré, par exemple un téléphone cellulaire de type *iPhone* ou un baladeur ou une tablette multimédia de type *iPod Touch* ou *iPad* (marques déposées de Apple Inc., USA). Ces appareils incorporent les divers organes de contrôle nécessaires à la détection des commandes de pilotage et à l'échange bidirectionnel de données avec le drone via une liaison sans fil de type réseau local *Wi-Fi* (IEEE 802.11) ou *Bluetooth* (marques déposées). Ils sont en outre pourvus d'un écran tactile affichant l'image captée par la caméra frontale du drone, avec en superposition un certain nombre de symboles permettant l'activation de commandes par simple contact du doigt de l'utilisateur sur cet écran tactile.

Plus précisément, le drone est piloté par l'utilisateur au moyen de signaux émis par le détecteur d'inclinaisons de l'appareil, inclinaisons qui seront répliquées par le drone : par exemple, pour faire avancer le drone l'utilisateur incline son appareil selon son axe de tangage, et pour déporter le drone à droite ou à gauche il incline ce même appareil par rapport à son axe de roulis. De cette manière, si le drone est commandé de manière à s'incliner ou "plonger" vers le bas (inclinaison suivant un angle de tangage), il progressera vers l'avant avec une vitesse d'autant plus élevée que l'inclinaison sera importante ; inversement s'il est commandé de manière à se "cabrer" dans le sens opposé, sa vitesse ralentira progressivement puis s'inversera en repartant vers l'arrière. De la même façon, pour une commande d'inclinaison suivant un axe de roulis le drone penchera à droite ou à gauche, provoquant un déplacement linéaire en translation horizontale vers la droite ou vers la gauche.

L'utilisateur dispose d'autres commandes affichées sur l'écran tactile, notamment de "montée/descente" (commande des gaz) et de " pivotement à droite/ pivotement à gauche" (pivotement du drone autour de son axe de lacet).

Le drone est également pourvu d'une commande de passage en point fixe : lorsque l'utilisateur lâche toutes les commandes de son appareil de télécommande, le drone s'immobilise et se stabilise au point fixe de façon entièrement automatique.

L'affichage sur l'écran de l'appareil de l'image captée par la caméra frontale du drone, avec en superposition les symboles des touches de pilotage, permet ainsi un "pilotage immersif" où l'utilisateur se sert de l'image de la caméra embarquée de la même façon que s'il se trouvait lui-même à bord du drone.

Mais, précisément, ce mode de pilotage implique un certain entraînement avant que l'utilisateur ne puisse "s'imaginer dans le drone" pour contrôler celui-ci, ce qui n'est pas la manière la plus intuitive de le piloter pour un débutant ou un enfant. En effet, lors d'une première prise en main l'utilisateur aura tendance à maintenir son regard fixé sur le drone plutôt que sur l'écran de l'appareil.

Or dans ce cas une difficulté supplémentaire apparaît, qui est celle de devoir se représenter mentalement l'orientation du drone par rapport à l'utilisateur lors des manoeuvres de pilotage.

Lorsque la direction de visée (utilisateur → drone) et la direction de progression du drone sont peu ou prou les mêmes - par exemple lorsque le drone tourne le dos à l'utilisateur et s'éloigne de lui -, cela ne pose pas de problème particulier, car les commandes de tangage/roulis sur l'appareil sont répliquées sur le drone, dont les axes de tangage/ roulis du drone sont orientés de la même manière.

En revanche, lorsque le drone fait face à l'utilisateur en se rapprochant de lui, ces commandes seront inversées : pour déporter le drone vers la gauche l'utilisateur devra incliner son appareil vers la droite (et non plus vers la gauche) et *vice versa*. Ou encore, lorsque la direction de progression du drone fait un angle avec la direction de visée - par exemple lorsque le drone se déplace en marche avant de la gauche vers la droite devant l'utilisateur -, pour accélérer ou ralentir ce mouvement de gauche à droite l'utilisateur devra pencher l'appareil vers l'avant ou vers l'arrière, et non vers la gauche ou vers la droite tel qu'il voit le drone.

En d'autres termes, dans ce cas de figure il devra mentalement inverser le rôle des inclinaisons en tangage et en roulis, s'il veut contrôler le mouvement du drone en l'accompagnant avec son appareil.

Le but de l'invention est de résoudre cette difficulté, en offrant à l'utilisateur, notamment à l'utilisateur novice, un mode de pilotage autre que le pilotage immersif, qui rende le drone plus facile à prendre en main. Essentiellement, l'invention propose de déterminer les orientations respectives du drone et de l'appareil par rapport à un repère fixe lié au sol, d'en déduire l'orientation relative du drone par rapport à l'appareil, et de recalculer les commandes imprimées à l'appareil par l'utilisateur de manière que les axes (tangage/roulis) des commandes et les orientations de ces axes (avant/arrière, ou gauche/droite) pris en compte pour le pilotage correspondent aux axes et orientations de l'appareil dans le repère fixe, et non plus aux axes et orientations, variables en permanence, du drone. On disposera alors d'un mode de pilotage du drone indépendant de l'orientation effective de ce dernier : ainsi, si par exemple le drone fait face à l'utilisateur, ce dernier pourra accélérer le drone en basculant l'appareil vers lui, le faire aller vers la droite en basculant l'appareil vers la droite, etc., donc de façon tout à fait intuitive s'il regarde le drone (alors qu'en mode "pilotage immersif" il aurait dû inverser ces commandes). De même, si le drone se déplace de gauche à droite, il pourra le rapprocher en basculant l'appareil vers lui, l'accélérer en basculant l'appareil vers la droite, etc., de manière très aisée et spontanée.

Plus précisément, l'invention propose un procédé de pilotage divulgué par exemple par le WO 2010/061099 A2 précité, à savoir un procédé de pilotage d'un drone à voilure tournante à rotors multiples entraînés par des moteurs respectifs commandables de manière différenciée pour piloter le drone en attitude et en vitesse, comprenant les étapes suivantes :

- par l'appareil : inclinaison de l'appareil selon des axes de tangage et de roulis de cet appareil, et production de signaux d'inclinaison correspondants, et transformation de ces signaux d'inclinaison de l'appareil en commandes de pilotage et envoi de ces commandes au drone ; et
- par le drone : réception des commandes de pilotage et génération à partir de ces commandes de valeurs de consigne pour une boucle de contrôle des moteurs du drone, ces valeurs de consigne étant aptes à commander l'attitude du drone selon des axes de tangage et de roulis du drone.

De façon caractéristique de l'invention, ce procédé comprend les étapes additionnelles suivantes :

- acquisition de premières données d'orientation d'un repère local lié à l'appareil par rapport à un repère absolu lié au sol ;
- acquisition de secondes données d'orientation d'un repère local lié au drone par rapport audit repère absolu ;
- calcul d'une donnée d'orientation angulaire relative du drone par rapport à l'appareil, à partir desdites premières et secondes données d'orientation ; et
- recalage du repère de l'appareil sur le repère du drone, par application aux commandes de pilotage d'une rotation fonction de ladite donnée d'orientation angulaire relative.

De cette manière, on produit des valeurs recalées de consigne selon les axes de tangage et de roulis du drone qui sont fonction des inclinaisons, appliquées à l'appareil par l'utilisateur selon les axes de tangage et de roulis de celui-ci, considérées dans le repère local lié à l'appareil et non plus dans celui lié au drone.

Les premières et les secondes données d'orientation sont avantageusement obtenues à partir des angles de cap respectifs de l'appareil et du drone par rapport au Nord.

Dans une première forme de mise en oeuvre, simplifiée, la rotation fonction de la donnée d'orientation angulaire relative est du type :

$$\begin{pmatrix} \theta_d \\ \varphi_d \end{pmatrix} = \begin{pmatrix} \cos \varDelta\psi & \sin \varDelta\psi \\ -\sin \varDelta\psi & \cos \varDelta\psi \end{pmatrix} \begin{pmatrix} \theta_I \\ \varphi_I \end{pmatrix}$$

$\theta_d$ et $\varphi_d$ étant les valeurs recalées de consigne selon les axes de tangage et de roulis dans le repère local lié au drone, $\theta_I$ et $\varphi_I$ étant les inclinaisons appliquées selon les axes de tangage et de roulis dans le repère local lié à l'appareil, et $\varDelta\psi$ étant la différence des angles de cap respectifs de l'appareil et du drone par rapport au Nord.

Ce calcul de rotation est alors avantageusement opéré au sein du drone, directement à partir de données reçues de l'appareil, ces données comprenant les valeurs des inclinaisons appliquées à l'appareil et une donnée d'angle de cap de l'appareil.

Dans une seconde forme de mise en oeuvre, complète, la rotation fonction de ladite donnée d'orientation angulaire relative est du type :

$$\begin{cases} \theta_{\mathrm{d}} = \tan^{-1}\left[\cos \Delta\psi \,.\, \tan\theta_{\mathrm{I}} + \sin\Delta\psi \,.\, \dfrac{\tan\varphi_{\mathrm{I}}}{\cos\theta_{\mathrm{I}}}\right] \\ \varphi_{\mathrm{d}} = \sin^{-1}\left[\cos\Delta\psi \,.\, \sin\varphi_{\mathrm{I}} - \sin\Delta\psi \,.\, \sin\theta_{\mathrm{I}} \,.\, \cos\varphi_{\mathrm{I}}\right] \end{cases}$$

$\theta_d$ et $\varphi_d$ étant les valeurs recalées de consigne selon les axes de tangage et de roulis du drone,

$\theta_I$ et $\varphi_I$ étant les inclinaisons appliquées selon les axes de tangage et de roulis de l'appareil, et

$\Delta\psi$ étant la différence des angles de cap respectifs de l'appareil et du drone par rapport au Nord.

Le calcul de rotation peut alors être opéré partiellement au sein de l'appareil et partiellement au sein du drone, avec :

- au sein de l'appareil, calcul d'un première rotation à partir des valeurs des inclinaisons $\theta_I$ et $\varphi_I$ appliquées à l'appareil et d'une donnée d'angle de cap $\psi_{iP}$ de l'appareil :

$$\begin{pmatrix} \theta'_I \\ \varphi'_I \end{pmatrix} = \begin{pmatrix} \cos\psi_{iP} & \sin\psi_{iP} \\ -\sin\psi_{iP} & \cos\psi_{iP} \end{pmatrix} \begin{pmatrix} \theta_I \\ \varphi_I \end{pmatrix}$$

- au sein du drone, calcul d'un seconde rotation à partir d'une donnée d'angle de cap $\psi_{drone}$ du drone :

$$\begin{pmatrix} \theta_d \\ \varphi_d \end{pmatrix} = \begin{pmatrix} \cos\psi_{drone} & -\sin\psi_{drone} \\ \sin\psi_{drone} & \cos\psi_{drone} \end{pmatrix} \begin{pmatrix} \theta'_I \\ \varphi'_I \end{pmatrix}$$

De façon générale, le repère absolu lié au sol est de préférence un repère géomagnétique, les angles de cap étant des angles mesurés par rapport au Nord magnétique.

La détermination de l'angle de cap du drone comprend alors l'acquisition d'une mesure de cap magnétique délivrée par un capteur magnétométrique du drone.

En particulier, l'angle de cap du drone peut être acquis par la combinaison : d'une mesure de cap magnétique délivrée par un capteur magnétométrique du drone avec application d'un filtrage passe-bas ; et d'une mesure de cap gyroscopique délivrée par une centrale inertielle du drone avec application d'un filtrage passe-haut complémentaire dudit filtrage passe-bas.

Le procédé comprend avantageusement une étape préalable de calibration du capteur magnétométrique du drone, avec les sous-étapes de :

- commande d'une rotation complète du drone en vol, à plat autour d'un axe de lacet ;
- relevé des mesures délivrées par le capteur magnétométrique ; et
- détermination d'une valeur de décalage global représentative des champs magnétiques perturbateurs environnants et du décalage propre du capteur magnétométrique.

On va maintenant décrire un exemple de mise en oeuvre de l'invention, en référence aux dessins annexés où les mêmes références numériques désignent d'une figure à l'autre des éléments identiques ou fonctionnellement semblables.

La Figure 1 est une vue d'ensemble montrant le drone et l'appareil associé permettant de piloter à distance celui-ci.

La Figure 2 montre les divers repères considérés par le procédé de l'invention : repère géographique absolu, repère propre du drone, repère propre de l'appareil.

Les Figures 3a à 3c illustrent l'effet des commandes d'inclinaison imprimées à l'appareil pour piloter le drone, respectivement dans le cas de la technique antérieure (figures 3a et 3b) et dans le cas de l'invention (figure 3c).

La Figure 4 est un schéma par blocs des différents organes de contrôle, d'asservissement et de pilotage assisté du drone.

La Figure 5 illustre la manière de déterminer l'orientation relative du drone par rapport à l'appareil.

La Figure 6 illustre les différentes composantes du champ magnétique terrestre, et leur orientation par rapport à un repère géographique terrestre.

La Figure 7 illustre de façon schématique la manière de combiner les informations d'orientation du champ magnétique obtenu par un magnétomètre et par la centrale gyroscopique du drone.

La Figure 8 illustre les relevés des mesures magnétométriques lors d'une rotation complète du drone sur lui-même, dans le cadre de la procédure de calibration préalable du magnétomètre, selon l'invention.

On va maintenant décrire un exemple de mise en oeuvre de l'invention.

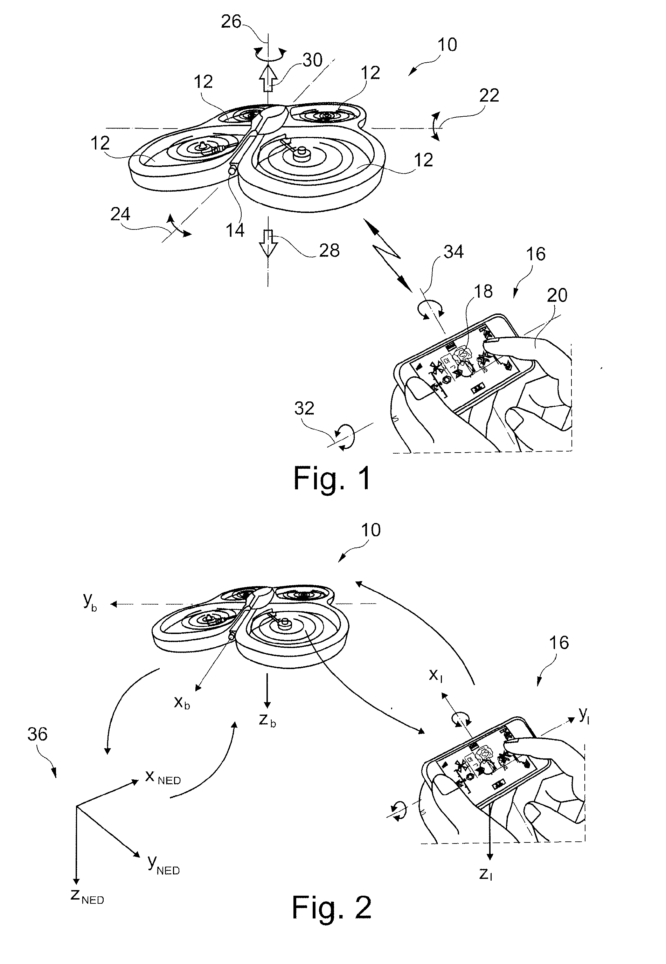

Sur la Figure 1, la référence 10 désigne de façon générale un drone, qui est par exemple un quadricoptère tel que le modèle *AR.Drone* de Parrot SA, Paris, France, décrit notamment dans les WO 2010/061099 A2 et EP 2 364 757 A1 précités, ainsi que dans les WO 2009/109711 A2 (qui décrit un exemple de système de stabilisation automatique à partir des informations fournies par un altimètre et une caméra à visée frontale) et FR 2 915 569 A1 (qui décrit notamment le système de contrôle avec gyromètres et accéléromètres utilisé par le drone).

Le drone 10 comporte quatre rotors coplanaires 12 dont les moteurs sont pilotés indépendamment par un système intégré de navigation et de contrôle d'attitude. Il est pourvu d'une première caméra 14 à visée frontale permettant d'obtenir une image de la scène vers laquelle se dirige le drone, par exemple une caméra grand angle à capteur CMOS. Le drone comporte également une seconde caméra à visée verticale (non représentée) pointant vers le bas, apte à capter des images successives du terrain survolé et utilisée notamment pour évaluer la vitesse du drone par rapport au sol.

Des capteurs inertiels (accéléromètres et gyromètres) permettent de mesurer avec une certaine précision les vitesses angulaires et les angles d'attitude du drone, c'est-à-dire les angles d'Euler décrivant l'inclinaison du drone. Un télémètre à ultrasons disposé sous le drone fournit par ailleurs une mesure de l'altitude par rapport au sol. En ce qui concerne la vitesse linéaire de translation du drone, celle-ci est évaluée par analyse de l'image fournie par la caméra à visée verticale du drone en combinaison avec les données accélérométriques, grâce à un logiciel qui estime le déplacement de la scène captée par la caméra d'une image à la suivante et applique à ce déplacement estimé un facteur d'échelle fonction de l'altitude mesurée.

Le drone 10 est piloté par un appareil de télécommande distant 16 pourvu d'un écran tactile 18 affichant l'image embarquée par la caméra frontale 14, avec en superposition un certain nombre de symboles permettant l'activation de commandes de pilotage par simple contact du doigt 20 d'un utilisateur sur l'écran tactile 18. L'appareil 16 est pourvu de moyens de liaison radio avec le drone pour l'échange bidirectionnel de données du drone 10 vers l'appareil 16, notamment pour la transmission de l'image captée par la caméra 14, et de l'appareil 16 vers le drone 10 pour l'envoi de commandes de pilotage. Cette liaison peut être par exemple de type réseau local *Wi-Fi* (IEEE 802.11) ou *Bluetooth* (marques déposées). L'appareil 16 est également pourvu de capteurs d'inclinaison permettant de contrôler l'attitude du drone en imprimant à l'appareil des inclinaisons correspondantes selon des axes de roulis et de tangage (on pourra se référer au WO 2010/061099 A2 précité pour plus de détails sur ces aspects du système).

Comme indiqué en introduction, l'appareil de télécommande 16 est avantageusement constitué par un téléphone ou baladeur multimedia à écran tactile et accéléromètre intégré, par exemple un téléphone cellulaire de type *iPhone,* un baladeur de type *iPod Touch* ou une tablette multimédia de type *iPad,* qui sont des appareils incorporant les divers organes de contrôle nécessaires à l'affichage et à la détection des commandes de pilotage, à la visualisation de l'image captée par la caméra frontale, et à l'échange bidirectionnel de données avec le drone par liaison *Wi-Fi* ou *Bluetooth.*

Le pilotage du drone 10 consiste à faire évoluer celui-ci par :

a) rotation autour d'un axe de tangage 22, pour le faire avancer ou reculer ; et/ou

b) rotation autour d'un axe de roulis 24, pour le décaler vers la droite ou vers la gauche ; et/ou

c) rotation autour d'un axe de lacet 26, pour faire pivoter vers la droite ou vers la gauche l'axe principal du drone, donc la direction de pointage de la caméra frontale ; et/ou

d) translation vers le bas 28 ou vers le haut 30 par changement du régime des gaz, de manière à respectivement réduire ou augmenter l'altitude du drone.

Lorsque ces commandes de pilotage sont appliquées par l'utilisateur à partir de l'appareil de télécommande 16 selon le mode de pilotage connu, les commandes a) et b) de pivotement autour des axes de tangage 22 et de roulis 24 sont obtenues par des inclinaisons de l'appareil 16 respectivement autour de son axe longitudinal 32 et de son axe transversal 34 : par exemple, pour faire avancer le drone il suffit d'incliner l'appareil vers l'avant en le penchant autour de l'axe 32, pour le déporter à droite il suffit d'incliner l'appareil en le penchant autour de l'axe 34 vers la droite, etc. Les commandes c) et d), quant à elles, résultent d'actions appliquées par contact du doigt 20 de l'utilisateur (généralement le doigt droit) sur des zones spécifiques correspondantes de l'écran tactile 18.

Le drone possède également un système automatique et autonome de stabilisation en vol stationnaire, correspondant à un mode autopiloté activé notamment dès que l'utilisateur retire son doigt de l'écran tactile de l'appareil, ou automatiquement à la fin de la phase de décollage, ou encore en cas d'interruption de la liaison radio entre l'appareil et le drone. Le drone passe alors à un état de sustentation où il sera immobilisé et maintenu dans cette position fixe par le système de pilotage automatique et de stabilisation, sans aucune intervention de l'utilisateur.

La technique proposée par l'invention a pour objet de faciliter le pilotage du drone en permettant à l'utilisateur de ne pas s'occuper de l'orientation du drone lors des manoeuvres de pilotage de celui-ci.

La Figure 2 illustre les divers repères considérés pour la mise en oeuvre de l'invention :

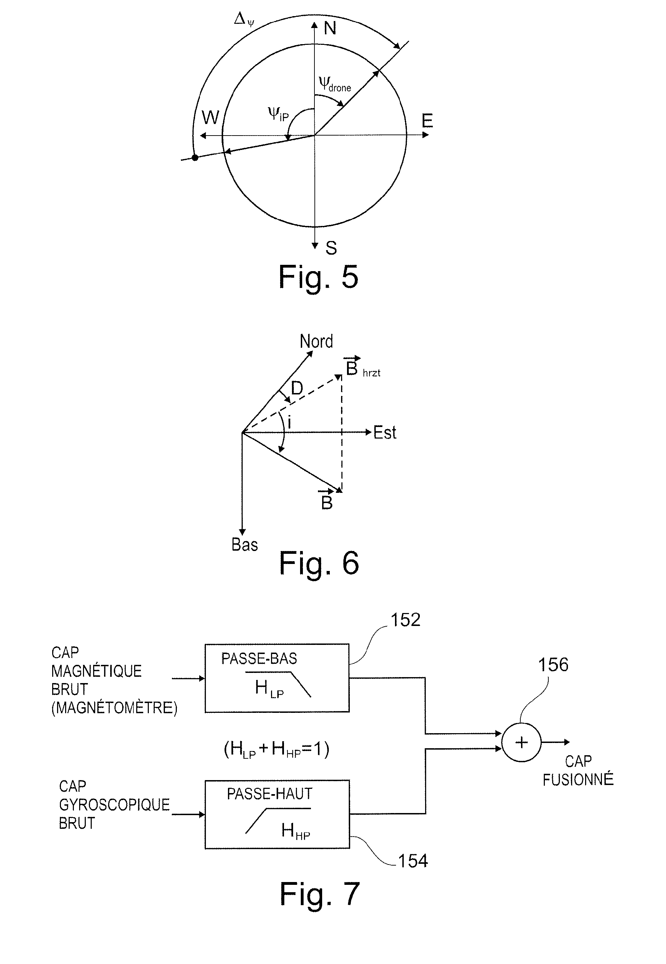

- en ce qui concerne le drone 10, on considérera un repère local $\{X_b,Y_b,Z_b\}$ lié au corps du drone. Le drone, bien que fortement symétrique par construction, comporte un avant et un arrière, et l'on considérera la position de la caméra comme pointant vers l'avant, définissant ainsi l'axe $X_b$. L'axe $Y_b$ est perpendiculaire à $X_b$ dans le plan moyen du drone, et l'axe $Z_b$ est l'axe vertical dirigé vers le sol ;
- En ce qui concerne l'appareil 16, celui-ci est également défini par un repère local propre $\{X_l,Y_l,Z_l\}$, $X_l$ et $Y_l$ correspondant à la direction en largeur et en longueur, respectivement, du boîtier de la télécommande et $Z_l$ correspondant à la normale au plan $X_lY_l$ ;
- Outre ces deux repères locaux (drone 10 et appareil 16), on considérera également un repère global 36, qui est un repère absolu fixe, notamment un repère géographique $\{X_{NED},Y_{NED},Z_{NED}\}$ de type NED (*North East Down*). Ce repère absolu est avantageusement un repère géomagnétique, l'axe $X_{NED}$ correspondant à la direction du Nord magnétique, qui pourra être déterminée de la manière que l'on exposera plus loin, en référence aux figures 6 à 8 ; La direction $Y_{NED}$ est la direction parallèle au plan du sol perpendiculaire au Nord géographique (c'est-à-dire l'Est géographique), et la direction $Z_{NED}$ est perpendiculaire au plan du sol et orientée vers le bas.

On dispose ainsi de trois repères, avec deux repères locaux $\{X_b,Y_b,Z_b\}$ et $\{X_l,Y_l,Z_l\}$, mobiles par rapport à un repère global $\{X_{NED},Y_{NED},Z_{NED}\}$.

Si l'on désigne par $\psi$, $\theta$ et $\varphi$ les commandes appliquées au drone :

- $\psi$ correspond à une rotation autour de l'axe $Z_{NED}$,
- $\theta$ correspond à une rotation autour de l'axe $Y_{NED}$ tourné de $\psi$, et
- $\varphi$ correspond à une rotation autour de l'axe $X_b$.

Avec ces conventions, le recalage de repère $\{X_b,Y_b,Z_b\}$ du drone par rapport au repère géographique $\{X_{NED},Y_{NED},Z_{NED}\}$ pourra s'exprimer par une matrice de la forme :

$$R = \begin{bmatrix} cos\theta cos\psi & sin\theta sin\varphi cos\psi - sin\psi cos\varphi & cos\psi sin\theta cos\varphi + sin\varphi sin\psi \\ sin\psi cos\theta & sin\theta sin\varphi sin\psi + cos\psi cos\varphi & sin\theta cos\varphi sin\psi - sin\varphi cos\psi \\ -sin\theta & cos\theta sin\varphi & cos\theta cos\varphi \end{bmatrix}$$

Pour le recalage du repère $\{X_l,Y_l,Z_l\}$ de l'appareil 16, une transformation comparable est appliquée, à partir des angles définissant l'orientation de l'appareil 16 par rapport au repère absolu $\{X_{NED},Y_{NED},Z_{NED}\}$.

Le passage inverse du repère géographique global au repère local du drone est obtenu au moyen d'une matrice qui sera la transposée de la matrice *R*.

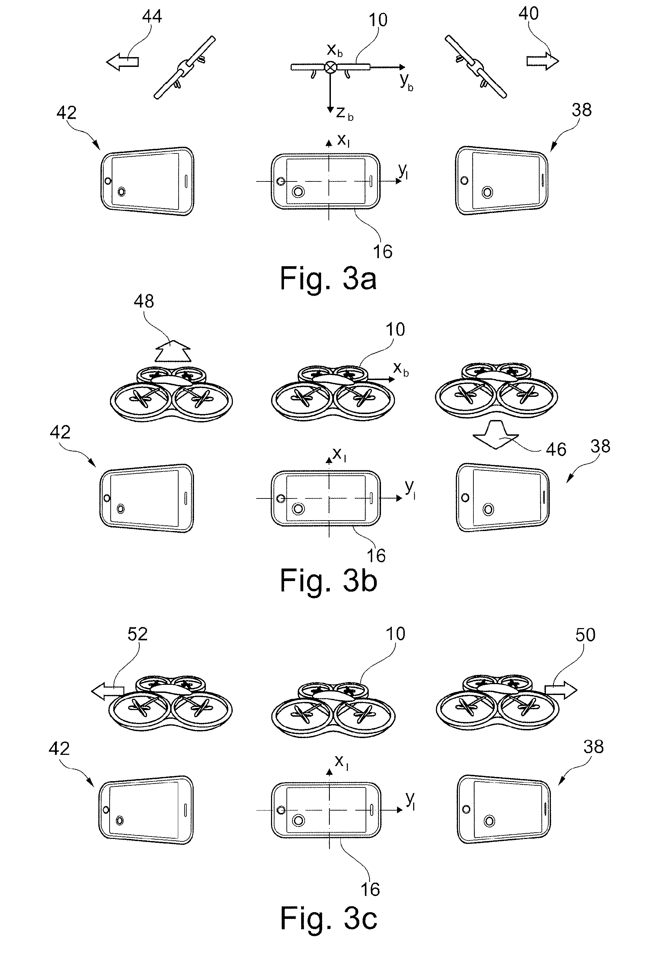

Le recalage des différents repères entre eux a pour but de pallier la difficulté illustrée Figures 3a à 3c.

Dans la situation illustrée Figure 3a où l'axe de progression $X_b$ du drone est sensiblement le même que l'axe correspondant $X_l$ de l'appareil, et orienté dans le même sens, le basculement vers la droite (comme en 38) de l'appareil va provoquer un basculement correspondant du drone, qui fera évoluer celui-ci vers la droite (flèche 40), donc dans le même sens que l'inclinaison de l'appareil 16. De la même façon, un basculement vers la gauche de l'appareil (comme en 42) provoquera un déplacement vers la gauche du drone (flèche 44).

En revanche, comme illustré Figure 3b, si le drone a tourné de 90° par rapport à la position de la Figure 3a, c'est-à-dire si sa direction $X_b$ est orientée vers la droite (et se déplace, par rapport à l'utilisateur, de la gauche vers la droite), alors une inclinaison 38 de l'appareil vers la droite provoquera un basculement du drone dans le même sens, dans le repère local du drone, ce qui se traduira, par rapport à l'utilisateur, par un déplacement dans le sens d'un rapprochement du drone de l'utilisateur (flèche 46). De la même façon un basculement de l'appareil vers la gauche (comme en 42) provoquera un déplacement dans le sens d'un éloignement du drone par rapport à l'utilisateur (flèche 48). Cette commande, adaptée à un pilotage immersif, n'est pas intuitive si l'utilisateur regarde le drone.

Dans le même ordre d'idées, si le mouvement du drone est un mouvement en direction de l'utilisateur (c'est-à-dire que les axes $X_b$ et $X_l$ sont sensiblement alignés mais orientés en sens inverse) un basculement de l'appareil vers la droite entraînera un basculement du drone vers la gauche, et inversement.

Pour permettre un pilotage plus intuitif, sans ces effets de permutation des axes de tangage et de roulis (comme dans le cas décrit Figure 3b) ou d'inversion du sens des commandes, l'invention propose d'opérer un changement de repère pour restituer des commandes intuitives.

L'effet de ces commandes intuitives est illustré Figure 3c : quelle que soit l'orientation du drone, un basculement vers la droite de l'appareil (commande 38) provoquera un déplacement vers la droite du drone (flèche 50), et un basculement vers la gauche (commande 42) un déplacement du drone vers la gauche (flèche 52), et de même pour les basculements vers l'avant ou vers l'arrière de l'appareil 16.

Essentiellement, l'invention tire parti de la présence, à la fois dans l'appareil 16 et dans le drone 10, de capteurs (de type magnétomètre) permettant à chacun d'entre eux de connaître sa propre orientation dans un repère absolu, à savoir le repère NED ou repère géomagnétique défini précédemment. Ainsi, lorsque l'utilisateur penchera l'appareil face à lui le drone se déplacera dans la direction vers laquelle l'appareil pointe, quelle que soit l'orientation propre du drone ; de même si l'utilisateur penche son appareil vers la droite, le drone se déplacera sur la droite de l'utilisateur, quelle que soit son orientation propre (comme illustré Figure 3c).

On va maintenant détailler les éléments techniques permettant de réaliser cette commande.

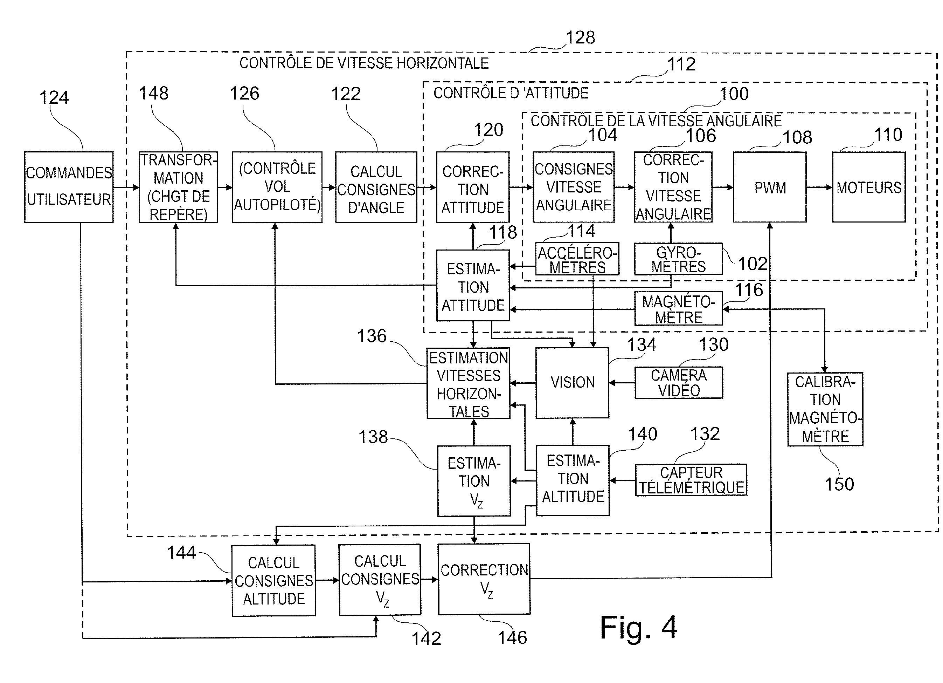

La Figure 4 est un schéma par blocs fonctionnels des différents organes de contrôle et d'asservissement du drone. On notera que, bien que ce schéma soit présenté sous forme de circuits interconnectés, la mise en oeuvre des différentes fonctions est essentiellement logicielle, cette représentation n'a qu'un caractère illustratif.

Le système de pilotage implique plusieurs boucles imbriquées, pour le contrôle de la vitesse horizontale, de la vitesse angulaire et de l'attitude du drone, en plus du contrôle des variations d'altitude automatiquement ou sous l'effet d'une commande de l'utilisateur.

La boucle la plus centrale, qui est la boucle 100 de contrôle de la vitesse angulaire, utilise d'une part les signaux fournis par des gyromètres 102 et d'autre part une référence constituée par des consignes de vitesse angulaire 104, ces différentes informations étant appliquées en entrée d'un étage 106 de correction de la vitesse angulaire. Cet étage 106 pilote un étage 108 de contrôle des moteurs 110 afin de commander séparément le régime des différents moteurs pour corriger la vitesse angulaire du drone par l'action combinée des rotors entraînés par ces moteurs.

La boucle 100 de contrôle de la vitesse angulaire est imbriquée dans une boucle 112 de contrôle d'attitude, qui opère à partir des informations fournies par les gyromètres 102, des accéléromètres 114 et un magnétomètre 116, ces données étant appliquées en entrée d'un étage d'estimation d'attitude 118 de type fusion non-linéaire équivalente à un filtrage complémentaire. L'étage 118 délivre des consignes de vitesse angulaire appliquées à un circuit de correction d'attitude 120 de type PI (Proportionnel-Intégrateur), qui reçoit également des consignes d'angle générées par un circuit 122 à partir de commandes utilisateur 124 qui sont soit directement appliquées au circuit 122, soit modifiées ou substituées par des commandes de pilotage automatique générées par un circuit 126, notamment en mode de stabilisation automatique ou pendant des phases de transition autopilotées.

Ainsi, à partir de l'erreur entre la consigne (appliquée par l'utilisateur ou bien générée en interne dans le cas d'un pilotage automatique) et la mesure de l'angle donné par le circuit d'estimation d'attitude 118, la boucle 112 de contrôle d'attitude calcule une consigne en vitesse angulaire à l'aide du correcteur PI du circuit 120. La boucle 100 de contrôle de la vitesse angulaire calcule ensuite la différence entre la consigne de vitesse angulaire précédente et la vitesse angulaire effectivement mesurée par les gyromètres 102. Elle calcule ensuite à partir de ces informations les différentes consignes de vitesse de rotation (et donc de force ascensionnelle) à envoyer aux moteurs 110 du drone pour réaliser la manoeuvre initialement demandée par l'utilisateur, ou bien planifiée par le pilote automatique.

Pour le contrôle de la vitesse horizontale, notamment en fonctionnement autopiloté, une boucle 128 met en oeuvre une caméra vidéo verticale 130 et un capteur télémétrique 132 faisant fonction d'altimètre, qui produisent des informations appliquées à un circuit 134 recevant également les données issues des gyromètres 102 pour appliquer les corrections nécessaires à l'estimation de la vitesse horizontale, donnée par le circuit 136. Cette estimation de la vitesse horizontale peut être corrigée par une estimation de la vitesse verticale $V_Z$, donnée par le circuit 138 à partir d'une estimation d'altitude fournie par le circuit 140 recevant l'information du capteur télémétrique 132.

Pour le vol autopiloté, la vitesse horizontale estimée par le circuit 136 permet le calcul par le circuit 126 de consignes de vitesse qui seront ensuite appliquées en entrée de la boucle de contrôle d'attitude 112 après transformation en consignes d'angle par le circuit 122, pour amener progressivement le drone à l'arrêt puis maintenir celui-ci à une configuration avec vitesse et inclinaison nulles.

En ce qui concerne les déplacements verticaux du drone, l'utilisateur 124 applique soit une consigne de vitesse ascensionnelle $V_Z$ directement à un circuit 42, soit une consigne d'altitude à un circuit 144 qui calcule à partir de l'estimation d'altitude produite par le circuit 140 une consigne de vitesse ascensionnelle appliquée au circuit 142.

Dans l'un ou l'autre cas, la vitesse ascensionnelle (prescrite ou calculée) est appliquée à un circuit 146 comparant la vitesse ascensionnelle $V_Z$ de consigne avec la vitesse correspondante estimée, donnée par le circuit 138. Ce circuit 146 modifie en conséquence les données de commandes des moteurs (circuit 108) de manière à augmenter ou réduire la vitesse de rotation simultanément sur tous les moteurs de façon à minimiser l'écart entre vitesse ascensionnelle de consigne et vitesse ascensionnelle mesurée.

Enfin, et de façon caractéristique de l'invention, un circuit 148 opère un changement de repère pour recaler le repère propre du drone sur le repère propre de l'appareil.

Plus précisément, dans la technique de pilotage conventionnelle sans recalage du repère du drone sur celui de l'appareil, c'est-à-dire en mode de "pilotage immersif", la commande est de la forme :

$$\begin{pmatrix} \theta_d \\ \varphi_d \end{pmatrix} = \begin{pmatrix} \theta_I \\ \varphi_I \end{pmatrix}$$

$\theta_d$ et $\varphi_d$ étant les angles d'Euler de consigne du drone dans son propre repère, et
$\theta_I$ et $\varphi_I$ étant les angles d'Euler de l'appareil.

En d'autres termes, les angles de consigne du drone correspondent aux angles caractérisant l'attitude de l'appareil dans son repère.

Ici et dans la suite, ces égalités sont bien entendu données à un facteur d'amplification éventuel près, et avec des limitations éventuelles d'inclinaison maximale dans un sens et dans l'autre pour éviter toute commande dépassant les possibilités physiques du drone.

Dans le cas de l'invention, on réalise un changement de repère pour recaler le repère propre du drone sur le repère propre de l'appareil et permettre ainsi un pilotage intuitif, indépendant de l'orientation relative du drone par rapport à l'utilisateur, tel que celui-ci voit le drone.

Comme on l'a indiqué plus haut, cette transformation est opérée par rapport à un repère absolu, qui est ici avantageusement le repère géomagnétique terrestre, déterminé de la manière que l'on exposera plus bas à partir des données fournies par le magnétomètre 116 après que ce dernier ait fait l'objet d'une calibration commandée par le circuit 150.

Pour connaître l'orientation relative du drone par rapport à l'appareil, il est suffisant de connaître les orientations absolues de chacun de ces deux dispositifs par rapport au sol, en particulier par rapport au Nord magnétique du repère géomagnétique NED.

Comme illustré Figure 5, on notera par la lettre $\psi$ les caps, c'est-à-dire les angles orientés caractérisant l'orientation du drone, ou de l'appareil, par rapport au Nord magnétique dans le repère NED.

En ce qui concerne l'appareil, le cap $\psi_{iP}$ est obtenu au moyen du magnétomètre intégré à l'appareil, redressé à l'aide des autres capteurs inertiels de l'appareil.

En ce qui concerne le drone, le cap $\psi_{drone}$ est obtenu par une combinaison d'informations fournies par les différents capteurs du drone, incluant le magnétomètre 116. On verra plus bas, en référence aux Figures 6 à 8, la manière d'obtenir une information fiable du cap $\psi_{drone}$.

La Figure 5 est une vue en plan, parallèlement au plan du sol, du repère NED montrant l'orientation du cap $\psi_{iP}$ de l'appareil et du cap $\psi_{drone}$ du drone. Si l'on suppose ces deux caps connus (on verra plus bas la manière de les déterminer), il s'agit de recaler par une rotation d'angle $\Delta\psi = \psi_{iP} - \psi_{drone}$ le repère local du drone sur le repère local de l'appareil.

Si l'on désigne par $\theta_I$ et $\varphi_I$ les angles de consigne produits par l'utilisateur, c'est-à-dire les inclinaisons imprimées à l'appareil selon les axes de tangage et de roulis, on démontre que les angles de consigne $\theta_d$ et $\varphi_d$ qui doivent être appliqués au drone sont déterminés par le système de deux relations suivant :

$$\begin{cases} \theta_d = \tan^{-1}\left[\cos\Delta\psi \, . \, \tan\theta_I + \sin\Delta\psi \, . \, \dfrac{\tan\varphi_I}{\cos\theta_I}\right] \\ \varphi_d = \sin^{-1}\left[\cos\Delta\psi \, . \, \sin\varphi_I - \sin\Delta\psi \, . \, \sin\theta_I \, . \, \cos\varphi_I\right] \end{cases}$$

$\Delta\psi$ étant la différence des angles de cap respectifs de l'appareil et du drone par rapport au Nord.

La mise en oeuvre de ce recalage consiste donc à effectuer une transformation dépendante de $\Delta\psi$, $\theta_I$ et $\varphi_I$ sur les angles de consigne $\theta_d$ et $\varphi_d$ de l'appareil.

Dans une *premier mode de mise en oeuvre,* cette opération est effectuée à partir du système d'équation ci-dessus, de façon complète et sans simplification.

Le calcul correspondant peut être effectué aussi bien au sein du drone qu'au sein de l'appareil.

De préférence, ces calculs sont effectués au sein du drone car de ces deux possibilités c'est celle-ci qui est la plus robuste et qui introduit le moins de latence.

En effet, si le drone reçoit de l'appareil les paramètres $\theta_I$, $\varphi_I$ set $\psi_{iP}$ (cap de l'appareil dans son repère propre), et compte tenu du fait qu'il est capable de déterminer son cap propre $\psi_{drone}$, alors il dispose de tous les paramètres lui permettant de calculer les angles de consigne recalés $\theta_d$ et $\varphi_d$.

En revanche, si le calcul est opéré au sein de l'appareil, il sera nécessaire que le drone transmette son cap $\psi_{drone}$ à l'appareil, qui calculera localement les angles recalés $\theta_d$ et $\varphi_d$ et les enverra au drone pour commander les moteurs de ce dernier : dans ce cas, il y aura deux transmissions de données (du drone vers l'appareil puis de l'appareil vers le drone), ce qui augmentera le temps de latence par rapport à la solution précédente qui ne nécessitait qu'une seule transmission de données (de l'appareil vers le drone).

Le calcul des nouveaux angles de consigne recalés au sein du drone permet également de simplifier le travail des développeurs tiers, par exemple pour la programmation de jeux exécutés au sein de l'appareil et mettant en oeuvre le mode de pilotage selon l'invention : si tous les calculs sont opérés au sein du drone, le développeur n'aura pas besoin de connaître le mode de calcul des angles de consigne recalés, exécutés entièrement au sein du logiciel interne du drone.

Enfin, le choix d'effectuer le calcul au sein du drone réduit les conséquences des coupures transitoires de communication sur la liaison entre le drone et l'appareil, puisqu'un seul transfert de données est nécessaire et non un aller-retour de commandes, comme dans le cas où le calcul est effectué au sein de l'appareil (voir ci-dessus).

Dans un *second mode de mise en oeuvre,* la commande exacte donnée par le système de deux équations plus haut est remplacée par une forme simplifiée, valable pour une approximation avec des angles faibles :

$$\begin{pmatrix} \theta_d \\ \varphi_d \end{pmatrix} = \begin{pmatrix} \cos\Delta\psi & \sin\Delta\psi \\ -\sin\Delta\psi & \cos\Delta\psi \end{pmatrix} \begin{pmatrix} \theta_I \\ \varphi_I \end{pmatrix}$$

Cette mise en oeuvre peut être réalisée par une transformation dépendant seulement de $\Delta\psi$ sur les angles $\theta_I$ et $\varphi_I$ de l'appareil, avant d'appliquer ces derniers à la boucle d'asservissement du drone.

Cette transformation peut être décomposée en deux rotations, l'une étant effectuée au sein de l'appareil, et l'autre au sein du drone. Ainsi, aucun de ces deux dispositifs n'aura besoin de connaître le cap de l'autre.

La première rotation, d'angle $\psi_{iP}$, est effectuée au sein de l'appareil, et renvoie une commande intermédiaire $\theta'_I$ et $\varphi'_I$ :

$$\begin{pmatrix} \theta'_I \\ \varphi'_I \end{pmatrix} = \begin{pmatrix} \cos\psi_{iP} & \sin\psi_{iP} \\ -\sin\psi_{iP} & \cos\psi_{iP} \end{pmatrix} \begin{pmatrix} \theta_I \\ \varphi_I \end{pmatrix}$$

Cette commande intermédiaire est envoyée au drone, qui calcule à partir de sa propre donnée d'angle de cap $\psi_{drone}$, une rotation d'angle -$\psi_{drone}$ donnant la consigne d'angle finale $\theta_d$, $\varphi_d$ :

$$\begin{pmatrix} \theta_d \\ \varphi_d \end{pmatrix} = \begin{pmatrix} \cos\psi_{drone} & -\sin\psi_{drone} \\ \sin\psi_{drone} & \cos\psi_{drone} \end{pmatrix} \begin{pmatrix} \theta'_I \\ \varphi'_I \end{pmatrix}$$

On va maintenant décrire une manière de déterminer le cap magnétique $\psi_{drone}$ du drone.

Concrètement, cette valeur de cap $\psi_{drone}$ est obtenue à partir d'informations délivrées par plusieurs capteurs embarqués incluant le magnétomètre 116, mais également la centrale gyroscopique 102 afin de compenser un certain nombre de perturbations induites par le drone lui-même (courants élevés circulant dans les conducteurs, aimant des moteurs ...) et dues aux imperfections de la mesure (biais du capteur, bruit de mesure élevé).

Il s'agit de mesurer l'orientation du drone par rapport au repère géomagnétique terrestre. Localement, le champ magnétique terrestre à la surface du globe produit un vecteur *B* qui peut être caractérisé, comme illustré Figure 6, par :

- sa magnitude (mesurée en milligauss),
- sa déclinaison *D* par rapport au Nord géographique, et
- son inclinaison *I* par rapport au plan de l'horizontale (Nord géographique, Est géographique).

La déclinaison, qui est en général assez faible, n'a pas d'influence pour la mise en oeuvre de l'invention, dans la mesure où le repère choisi est un repère géomagnétique et où l'on cherche à déterminer la direction du Nord magnétique et non celle du Nord géographique (ici sans importance).

L'inclinaison *I*, en revanche, peut prendre des valeurs relativement importantes, positives ou négatives, par exemple de l'ordre de 65° vers le bas (*magnetic tip*) à Paris.

L'amplitude du champ magnétique terrestre *B* varie typiquement de 200 à 600 mG suivant la position géographique, avec une amplitude de la composante horizontale du champ magnétique $B_{hrzt}$, variant de 0 à 300 mG en fonction de l'amplitude locale du champ *B* et de l'inclinaison *I* locale. C'est cette composante $B_{hrzt}$ que l'on cherche à déterminer, qui permettra d'estimer le cap $\psi_{drone}$ du drone par rapport au Nord magnétique.

La composante verticale $B_{hrzt}$ du champ magnétique peut être estimée à partir de la magnitude de la composante horizontale et de l'inclinaison *I* du champ magnétique. L'inclinaison du champ magnétique sera déterminée par une table de correspondance chargée en mémoire du drone, qui donnera pour les valeurs de latitude et de longitude (déterminées par exemple par un circuit GPS incorporé à l'appareil, ou par tout autre moyen) l'angle d'inclinaison du vecteur champ magnétique terrestre *B* par rapport à l'horizontale.

Toutefois, le cap magnétique donné par le magnétomètre du drone est entaché de nombreuses composantes parasites.

En premier lieu, on trouve une composante parasite relativement importante dans les hautes fréquences, du fait des aimants des moteurs du drone. Ces aimants étant tournants, leur contribution au champ magnétique tourne également avec eux, induisant une composante parasite dans les hautes fréquences (c'est-à-dire dans des fréquences de l'ordre de la vitesse de rotation des moteurs et au-dessus).

Pour éliminer cette première source de parasites, le cap magnétique du drone est avantageusement obtenu, comme illustré Figure 7, en combinant (i) la composante basse fréquence du cap magnétique brut produit par le magnétomètre 116, qui est peu fiable dans les hautes fréquences, avec (ii) les composantes hautes fréquences du capteur gyroscopique 102.

Cette combinaison est réalisée par deux filtres complémentaires 152, 154, respectivement passe-bas et passe-haut avec des fonctions de transfert $H_{LP}$ et $H_{HP}$ présentant la propriété de complémentarité $H_{LP} + H_{HP} = 1$. Les signaux résultants sont fusionnés en 156 pour donner une valeur de cap débarrassée des éléments parasites variables haute fréquence.

Cette technique permet de reconstruire la donnée de cap tout en filtrant les défauts des différents capteurs. On tire ainsi avantageusement parti de la fiabilité en basse fréquence et de la composante absolue de la mesure magnétométrique, tout en conservant la qualité de la mesure en dynamique grâce aux hautes fréquences de la mesure gyroscopique. Les problèmes de bruits hautes fréquences, importants sur les capteurs magnétométriques, sont ainsi filtrés. Les problèmes de dérive en température et liés à l'intégration mathématique des données des capteurs inertiels de type gyroscopique sont également compensés.

Les mesures délivrées par le magnétomètre sont toutefois entachées d'autres perturbations produites par l'environnement du capteur, notamment :

- les champs magnétiques générés par les forts courants d'alimentation des moteurs ;
- les champs magnétiques générés par les aimants fixes présents sur le drone (par exemple l'aimant de la fixation magnétique du carénage de protection), ces aimants n'étant pas tournants ; et
- le décalage ou *offset* propre du capteur magnétométrique.

Ces perturbations sont du même ordre de grandeur que le champ magnétique terrestre proprement dit, et il est donc nécessaire de les éliminer pour déterminer avec une précision suffisante le cap magnétique du drone. Ces diverses perturbations s'ajoutent et constituent un offset global, qui pourra être estimé au moyen d'une procédure de calibration préalable que l'on va maintenant décrire.

Les perturbations citées ci-dessus ont pour caractéristique d'être fixes dans le repère du drone. C'est cette propriété qui sera utilisée pour les estimer et les éliminer de la mesure.

La procédure de calibration consiste à faire tourner automatiquement le drone d'un tour sur lui-même, à plat et en vol (rotation de 360° autour de l'axe de lacet du drone). Les données magnétométriques mesurées sont donc la somme de l'offset et du champ magnétique extérieur. Mais l'offset est par nature constant dans le repère du drone, tandis que le champ magnétique extérieur (le champ magnétique terrestre que l'on cherche à déterminer) aura effectué un tour complet dans ce même repère.

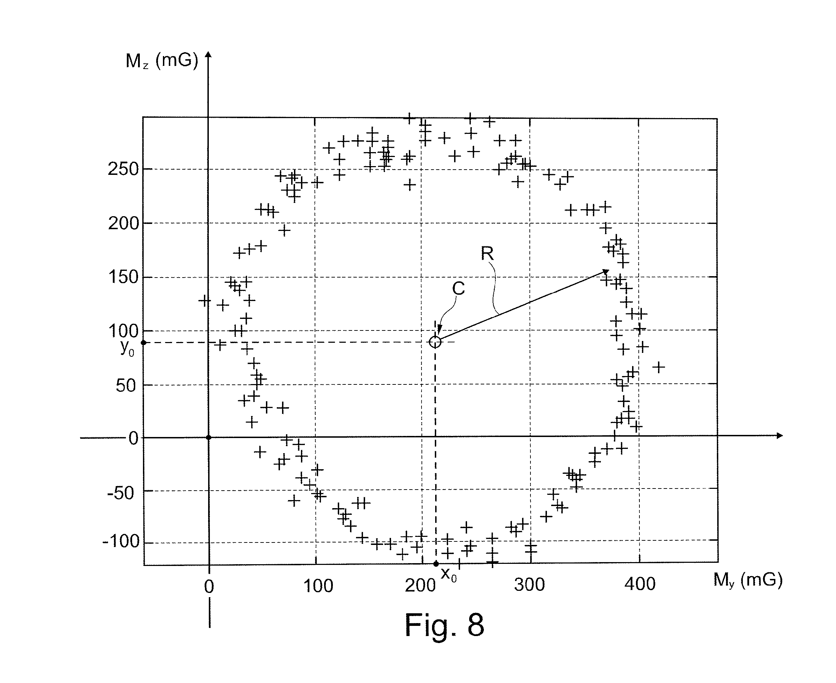

La Figure 8 illustre un exemple de relevé de mesures du capteur magnétométrique. Dans le plan des mesures, on obtient un nuage de points formant un cercle centré sur l'offset global, en C, et de rayon $R$ correspondant à la composante du champ magnétique terrestre.

A partir des mesures réalisées, le centre C et le rayon $R$ du cercle peuvent être obtenus par application d'un algorithme récursif d'optimisation basé sur la méthode des moindres carrés, d'un type en lui-même connu ; il s'agit, à partir des différents jeux de valeurs correspondant aux points de mesure, de chercher le meilleur centre et le meilleur rayon minimisant une fonction d'erreur.

On obtient ainsi l'offset à déduire dans le plan horizontal du drone par rapport aux mesures magnétométriques fournies.

En ce qui concerne l'offset dans la direction verticale, celui-ci peut être déterminé à partir du rayon $R$ estimé précédemment, des valeurs de mesures obtenues pendant la phase de calibration, ainsi que de la valeur locale de l'inclinaison, connue à partir d'une table de valeurs chargée en mémoire du drone.

Si l'on désigne $B_{hrzt}$ la composante horizontale du champ magnétique et $B_{vert}$ la composante verticale de ce même champ, cette dernière vaut : $B_{vert} = B_{hrzt}.\tan(inclinaison) = R.\tan(inclinaison)$, la valeur de l'inclinaison $I$ étant obtenue à partir de la table chargée en mémoire.

Or sur l'axe vertical, le champ magnétique mesuré $P_{mes}$ est affecté d'un biais $Z_0$ tel que $B_{mes} = Z_0 + B_{vert}$.

On peut estimer ce biais $Z_0$ en utilisant l'ensemble des mesures de calibration : $Z_0 = \overline{B_{mes}}$ - R.tan $(inclinaison)$, $\overline{B_{mes}}$ représentant la moyenne des mesures du champ magnétique sur l'axe vertical Z pendant la mesure de calibration.

Le cap magnétique est ensuite obtenu en compensant la mesure magnétique des angles de tangage et de roulis, puis en extrayant le cap donné par la composante horizontale de la mesure compensée :

$$\vec{B}_{comp} = \begin{pmatrix} B_{comp_X} \\ B_{comp_Y} \\ B_{comp_Z} \end{pmatrix} = R_{\theta_d}.R_{\varphi_d}\left(\begin{pmatrix} M_X \\ M_Y \\ M_Z \end{pmatrix} - \begin{pmatrix} X_0 \\ Y_0 \\ Z_0 \end{pmatrix}\right)$$

$$\psi_{mag} = -\tan^{-1}\left(\frac{B_{comp_Y}}{B_{comp_X}}\right)$$

$M_X$, $M_Y$, $M_Z$ représentant les valeurs brutes issues de la mesure magnétométrique, et $B_{compX}$, $B_{compY}$ et $B_{compZ}$ représentant les valeurs utiles, projetées dans le plan horizontal.

**Revendications**

1. Un procédé de pilotage, au moyen d'un appareil de télécommande, d'un drone à voilure tournante à rotors multiples entraînés par des moteurs respectifs commandables de manière différenciée pour piloter le drone en attitude et en vitesse, comprenant les étapes suivantes :

   - par l'appareil (16) :

       · inclinaison de l'appareil selon des axes de tangage (32) et de roulis (34) de cet appareil, et production de signaux d'inclinaison ($\theta_I$, $\varphi_I$) correspondants ; et
       · transformation de ces signaux d'inclinaison de l'appareil en commandes de pilotage et envoi de ces commandes au drone, et

   - par le drone (10) :

       · réception des commandes de pilotage et génération à partir de ces commandes de valeurs de consigne ($\theta_d$, $\varphi_d$) pour une boucle de contrôle des moteurs du drone, ces valeurs de consigne étant aptes à commander l'attitude du drone selon des axes de tangage (22) et de roulis (24) du drone,
       ce procédé étant **caractérisé par** les étapes additionnelles suivantes :

   - acquisition de premières données d'orientation ($\psi_{iP}$) d'un repère local lié à l'appareil ($X_I Y_I Z_I$) par rapport à un repère absolu lié au sol ($X_{NED}Y_{NED}Z_{NED}$) ;
- acquisition de secondes données d'orientation ($\psi_{drone}$) d'un repère local lié au drone ($X_bY_bZ_b$) par rapport audit repère absolu ($X_{NED}Y_{NED}Z_{NED}$) ;
- calcul d'une donnée d'orientation angulaire relative ($\Delta\psi$) du drone par rapport à l'appareil, à partir desdites premières et secondes données d'orientation ; et
- recalage du repère de l'appareil sur le repère du drone, par application aux commandes de pilotage d'une rotation fonction de ladite donnée d'orientation angulaire relative,
de manière à produire ainsi des valeurs recalées de consigne selon les axes de tangage et de roulis du drone qui soient fonction des inclinaisons, appliquées à l'appareil par l'utilisateur selon les axes de tangage et de roulis de celui-ci, considérées dans le repère local lié à l'appareil et non plus dans celui lié au drone.

2. Le procédé de la revendication 1, dans lequel les premières et les secondes données d'orientation sont obtenues à partir des angles de cap respectifs ($\psi_{drone}, \psi_{iP}$) de l'appareil et du drone par rapport au Nord.

3. Le procédé de la revendication 2, dans lequel ladite rotation fonction de ladite donnée d'orientation angulaire relative est du type :

$$\begin{pmatrix} \theta_d \\ \varphi_d \end{pmatrix} = \begin{pmatrix} \cos\Delta\psi & \sin\Delta\psi \\ -\sin\Delta\psi & \cos\Delta\psi \end{pmatrix} \begin{pmatrix} \theta_I \\ \varphi_I \end{pmatrix}$$

$\theta_d$ et $\varphi_d$ étant les valeurs recalées de consigne selon les axes de tangage et de roulis dans le repère local lié au drone,
$\theta_I$ et $\varphi_I$ étant les inclinaisons appliquées selon les axes de tangage et de roulis dans le repère local lié à l'appareil, et
$\Delta\psi$ étant la différence des angles de cap respectifs de l'appareil et du drone par rapport au Nord.

4. Le procédé de la revendication 3, dans lequel le calcul de ladite rotation est opéré au sein du drone, directement à partir de données reçues de l'appareil, ces données comprenant les valeurs des inclinaisons appliquées à l'appareil et une donnée d'angle de cap de l'appareil.

5. Le procédé de la revendication 2, dans lequel ladite rotation fonction de ladite donnée d'orientation angulaire relative est du type :

$$\begin{cases} \theta_d = \tan^{-1}\left[\cos\Delta\psi \,.\, \tan\theta_I + \sin\Delta\psi \,.\, \dfrac{\tan\varphi_I}{\cos\theta_I}\right] \\ \varphi_d = \sin^{-1}[\cos\Delta\psi \,.\, \sin\varphi_I - \sin\Delta\psi \,.\, \sin\theta_I \,.\, \cos\varphi_I] \end{cases}$$

$\theta_d$ et $\varphi_d$ étant les valeurs recalées de consigne selon les axes de tangage et de roulis du drone,
$\theta_I$ et $\varphi_I$ étant les inclinaisons appliquées selon les axes de tangage et de roulis de l'appareil, et
$\Delta\psi$ étant la différence des angles de cap respectifs de l'appareil et du drone par rapport au Nord.

6. Le procédé de la revendication 5, dans lequel le calcul de ladite rotation est opéré partiellement au sein de l'appareil et partiellement au sein du drone, avec :

- au sein de l'appareil, calcul d'un première rotation à partir des valeurs des inclinaisons $\theta_I$ et $\psi_I$ appliquées à l'appareil et d'une donnée d'angle de cap $\psi_{iP}$ de l'appareil :

$$\begin{pmatrix} \theta'_I \\ \varphi'_I \end{pmatrix} = \begin{pmatrix} \cos\psi_{iP} & \sin\psi_{iP} \\ -\sin\psi_{iP} & \cos\psi_{iP} \end{pmatrix} \begin{pmatrix} \theta_I \\ \varphi_I \end{pmatrix}$$

- au sein du drone, calcul d'un seconde rotation à partir d'une donnée d'angle de cap $\psi_{drone}$ du drone :

$$\begin{pmatrix} \theta_d \\ \varphi_d \end{pmatrix} = \begin{pmatrix} \cos\psi_{drone} & -\sin\psi_{drone} \\ \sin\psi_{drone} & \cos\psi_{drone} \end{pmatrix} \begin{pmatrix} \theta'_I \\ \varphi'_I \end{pmatrix}$$

7. Le procédé de la revendication 2, dans lequel le repère absolu lié au sol est un repère géomagnétique, et les angles de cap sont des angles mesurés par rapport au Nord magnétique.

8. Le procédé de la revendication 7, dans lequel la détermination de l'angle de cap du drone comprend l'acquisition d'une mesure de cap magnétique délivrée par un capteur magnétométrique (116) du drone.

9. Le procédé de la revendication 8, dans lequel l'angle de cap du drone est acquis par la combinaison :

    - d'une mesure de cap magnétique délivrée par un capteur magnétométrique (116) du drone avec application d'un filtrage passe-bas (152), et
    - d'une mesure de cap gyroscopique délivrée par une centrale inertielle du drone (102) avec application d'un filtrage passe-haut (154) complémentaire dudit filtrage passe-bas.

10. Le procédé de la revendication 8, comprenant en outre une étape préalable de calibration du capteur magnétométrique du drone.

11. Le procédé de la revendication 10, dans lequel ladite étape de calibration comprend les sous-étapes de :

    - commande d'une rotation complète du drone en vol, à plat autour d'un axe de lacet ;
    - relevé des mesures délivrées par le capteur magnétométrique ;
    - détermination d'une valeur de décalage global représentative des champs magnétiques perturbateurs environnants et du décalage propre du capteur magnétométrique.

Fig. 1

Fig. 2

Fig. 3a

Fig. 3b

Fig. 3c

Fig. 4

EP 2 613 213 A1

Fig. 5

Fig. 6

Fig. 7

Fig. 8

EP 2 613 213 A1

Europäisches
Patentamt

European
Patent Office

Office européen
des brevets

**RAPPORT DE RECHERCHE EUROPEENNE**

Numéro de la demande

EP 13 15 0127

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y,D | WO 2010/061099 A2 (PARROT [FR]; LEFEBURE MARTIN [FR]) 3 juin 2010 (2010-06-03) * le document en entier * ----- | 1-11 | INV. G05D1/00 A63H30/04 |
| Y | US 5 043 646 A (SMITH III JAY [US] ET AL) 27 août 1991 (1991-08-27) * le document en entier * ----- | 1-11 | |
| Y | US 5 552 983 A (THORNBERG CHRISTOPHER A [US] ET AL) 3 septembre 1996 (1996-09-03) * le document en entier * ----- | 1-11 | |
| Y | US 2009/204276 A1 (STUCKMAN KATHERINE C [US] ET AL) 13 août 2009 (2009-08-13) * le document en entier * ----- | 1-11 | |

DOMAINES TECHNIQUES RECHERCHES (IPC)

G05D
A63H

Le présent rapport a été établi pour toutes les revendications

| Lieu de la recherche | Date d'achèvement de la recherche | Examinateur |
|---|---|---|
| Munich | 14 mars 2013 | Vañó Gea, Joaquín |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**    EP 13 15 0127

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

14-03-2013

| Document brevet cité au rapport de recherche | | Date de publication | Membre(s) de la famille de brevet(s) | | Date de publication |
|---|---|---|---|---|---|
| WO 2010061099 | A2 | 03-06-2010 | AT | 556754 T | 15-05-2012 |
| | | | CN | 102227903 A | 26-10-2011 |
| | | | EP | 2356806 A2 | 17-08-2011 |
| | | | FR | 2938774 A1 | 28-05-2010 |
| | | | JP | 2012509812 A | 26-04-2012 |
| | | | US | 2011288696 A1 | 24-11-2011 |
| | | | WO | 2010061099 A2 | 03-06-2010 |
| US 5043646 | A | 27-08-1991 | AUCUN | | |
| US 5552983 | A | 03-09-1996 | AU | 697735 B2 | 15-10-1998 |
| | | | AU | 6196196 A | 12-02-1998 |
| | | | CA | 2182374 A1 | 08-09-1995 |
| | | | DE | 69501209 D1 | 22-01-1998 |
| | | | DE | 69501209 T2 | 02-04-1998 |
| | | | EP | 0748470 A1 | 18-12-1996 |
| | | | IL | 112703 A | 17-08-1999 |
| | | | JP | H09510032 A | 07-10-1997 |
| | | | RU | 2145725 C1 | 20-02-2000 |
| | | | US | 5552983 A | 03-09-1996 |
| | | | WO | 9524004 A1 | 08-09-1995 |
| US 2009204276 | A1 | 13-08-2009 | US | 2009204276 A1 | 13-08-2009 |
| | | | US | 2012245764 A1 | 27-09-2012 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2010061099 A2
- EP 2364757 A1
- WO 2009109711 A2
- FR 2915569 A1